# EUROPEAN PATENT APPLICATION

(11) **EP 1 461 986 A1**
(43) Date of publication of application: **29.09.2004**
(21) Application number: 03425047.2
(22) Date of filing: 29.01.2003
(51) Int. Cl.: A01B 33/06, A01B 33/10

(54) **An apparatus for tilling the soil**

(71) Applicant: Laserjet S.r.l., 36026 Poiana Maggiore (Vicenza) (IT)
(72) Inventor: Fraron, Lino, 36040 Orgiano, Vicenza (IT); Fraron, Ivo, 36040 Orgiano, Vicenza (IT)
(74) Representative: Lanzoni, Luciano

(57) **Abstract**

Apparatus for tilling the soil, able to be associated to a towing vehicle to be operated according to a predefined direction of advance, and comprising a rigid support structure (2) able to be fastened to the towing vehicle, and means (4) for tilling the soil mounted on the support structure (2). The tilling means (4) comprise at least a motorised auger (5) pivotally mounted on the support structure (2) according to a vertical axis of rotation. The auger (5) can be immersed in the soil to be tilled to exert on the soil itself a thrust having at least an upwardly directed component. Moreover, the auger (5) comprises an inner shaft (6) and a helical blade (7) developing on the inner shaft (6), and it has cone frustum shape to exert a differentiated action on the different layers of soil to be tilled.

## Description

The present invention relates to an apparatus for tilling the soil, comprising the characteristics expressed in the preamble of claim 1.

Today, soil tilling is performed according to well defined traditional procedures entailing a succession of operative steps, each conducted with appropriate machinery.

After the harvest, the soil is ploughed to a depth that varies according to soil type and cultivation type (normally, ploughing involves a layer of 40-55 cm).

Though many different types of ploughs exist, depending on requirements, all substantially share the characteristic of cutting a continuous slice of soil with rectangular section, which they then upset laterally into a furrow open during the previous pass.

The plough is normally towed by a tractor that advances maintaining its wheels inside the furrows obtained in the soil, whose depth roughly corresponds to that of the layer of soil to be ploughed.

Subsequently the soil is allowed to rest until shortly before sowing, when it is again tilled superficially with appropriate finishing devices which prepare it for sowing. Examples of finishing devices are harrows, rotating or otherwise, and cultivators.

However, over the years a layer of compacted soil called "sole" forms underneath the strip of soil that is normally ploughed (due mainly to the crushing action of the tractor wheels during the ploughing operation) which, particularly in argillaceous soils, is impermeable and thus may cause problems to the crops due to water retention.

To overcome this drawback, particular tools are currently used called subsoilers, constituted by a plurality of vertical "blades" of such length as to extend below the sole (normally about 80/90 cm below the level of the soil). A pass with a subsoiler tool thus allows to break the sole with longitudinal cuts.

Occasionally the subsoiler devices are associated to devices, called drainers, which allow to create drainage channels below the sole. These drainage channels are created by organs with cylindrical section associated to the lower ends of the vertical blades and driven thereby into the soil.

In spite of all described arrangements, the apparatuses for tilling the soil in use today are not free from drawbacks.

In the first place, the ploughing technique used today does not assure a good aeration of the soil, or a good de-compaction. As stated, ploughing consists of a simple upsetting of the upper layer of the soil.

The fact that the soil remains substantially compact, along with the presence ofthe underlying sole, entails problems particularly in argillaceous soils, which by their very nature tend, with humidity, to become compacted. In particular, in such soils, the drainage channels, or at least the cuts obtained through the sole, which connect the ploughed layer of soil to the underlying drainage channels are often occluded.

A second drawback is, as stated, the fact that the tractor during the ploughing operation advances with the wheels inserted inside furrows obtained in the soil, causing the formation of the aforesaid sole.

An additional drawback of the apparatuses for tilling the soil heretofore known is represented by the fact that it is not necessary to have a succession of steps of tilling the soil with different tools, to obtain an optimal tilling thereof.

Moreover, given that on one hand the soil is exposed to atmospheric agents (such as years or months with more or less rainfall, with more or less frost, or other combinations), and on the other hand it needs multiple working steps to be carried out at successive times, but in any case within the time limit given by the time when it is necessary to sow, in particular circumstances it may prove difficult to be able to ready the soil in the most suitable ways and times.

In this situation, the technical task constituting the basis for the present invention is to obtain an apparatus for tilling the soil, which overcomes the aforesaid drawbacks.

In particular, a technical task of the present invention is to obtain an apparatus for tilling the soil that assures a proper aeration of the upper layer of the soil itself.

Another technical task of the present invention is to obtain an apparatus for tilling the soil which allows to break the sole which may be present in the field, and which in turn does not contribute to the formation of a new sole.

A further technical task of the present invention is to obtain an apparatus for working the soil which allows to execute a complete tilling of the soil with a single pass.

The specified technical task and the indicated aims are substantially achieved by an apparatus for tilling the soil, as described in the accompanying claims.

Further features and the advantages of the present invention shall become more readily apparent from the detailed description of some preferred, but not exclusive, embodiments of an apparatus for tilling the soil, illustrated in the accompanying drawings, in which:
- Figure 1 shows a plan view of a first embodiment of an apparatus for tilling the soil according to the present invention with some parts removed and others shown in see-through mode;
- Figure 2 shows a lateral view of a part of the equipment of Figure 1, with some parts removed the better to highlight others;
- Figure 3 shows a plan view of a second embodiment of an apparatus for working the soil according to the present invention with some parts removed and others in see-through mode;
- Figure 4 shows a lateral view of a part of the apparatus of Figure 3, with some parts removed the better to highlight others;
- Figure 5 shows a plan view of a third embodiment of an apparatus for tilling the soil according to the present invention with some parts removed and others in see-through mode;
- Figure 6 shows a lateral view of a part of the apparatus of Figure 5, with some parts removed the better to highlight others;
- Figure 7 shows a lateral view of a common detail of the embodiments of Figures 1, 3 and 5;
- Figure 8 shows a part of the apparatus of Figures 1, 3 and 5 according to the traces VIII-VIII, with some parts in see through mode and others removed.

With reference to the accompanying figures, the reference number 1 globally indicates an apparatus for tilling the soil according to the present invention.

The embodiments of the equipment 1 for tilling the soil of the present invention, shown in the accompanying figures, are destined to be associated to a towing vehicle such as a tractor to be operated according to a predefined direction of advance. This does not mean, however, that the apparatus 1 may not also be incorporated within an appropriate vehicle destined, exclusively or otherwise, to till the soil with the apparatus 1 itself.

All illustrated embodiments are complex embodiments, but the present invention can also be implemented with simpler embodiments, in which one or more of the additional elements shown in the accompanying figures, and described hereafter, may be omitted.

The apparatus 1 comprises a rigid support structure 2 able to be fastened to the towing vehicle in correspondence with its own hitching portions 3, and means 4 for tilling the soil mounted on the support structure 2.

Said tilling means 4 generally comprise at least a motorised auger 5, pivotally mounted on the support structure 2 according to its own axis of rotation. The auger 5 is destined to be immersed into the soil to be tilled, in order to exercise on the soil itself a thrust that presents at least an upwardly directed component.

In detail, the auger 5 comprises an inner shaft 6, and a helical blade 7 developing peripherally on the inner shaft 6.

In the preferred embodiment, the axis of rotation of the auger 5 is arranged vertically, and the auger 5 has a cone frustum development in order to exert a differentiated action on the different layers of soil to be tilled.

In particular, advantageously the auger 5 has decreasing diameter from the bottom towards the top. In this way it is able to exert a "blooming" action on the soil itself, guaranteeing an excellent aeration.

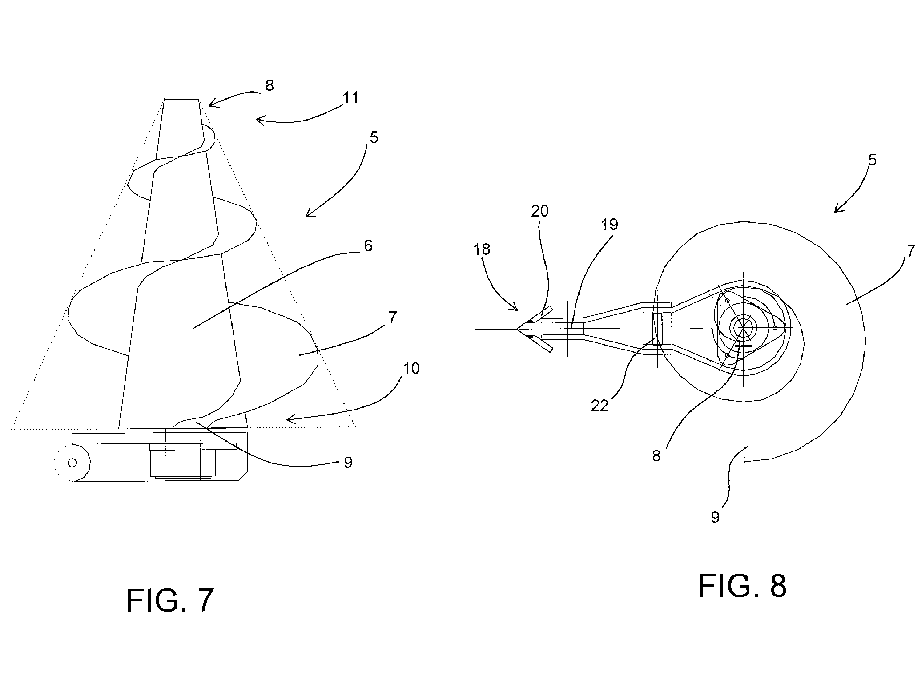

In all embodiments illustrated herein, the helical blade 7 has a first and a second terminal segment 8, 9 in correspondence respectively with the portion with maximum diameter 10 and with the portion with minimum diameter 11 of the cone frustum shaped auger 5. The first terminal segment is joined with the inner shaft 6, whilst the second terminal segment 9 has an accentuated downward inclination relative to the rest of the auger (Figure 7). In this way, the co-operation of the soil and of the second terminal segment 9 determines a downward traction on the auger 5, which maintains it in its working position.

Advantageously, the inner shaft 6 has cone frustum shape, with decreasing diameter in a way that corresponds to that of the auger 5 in its entirety. In this way, the maximum dimension of the helical blade 7.

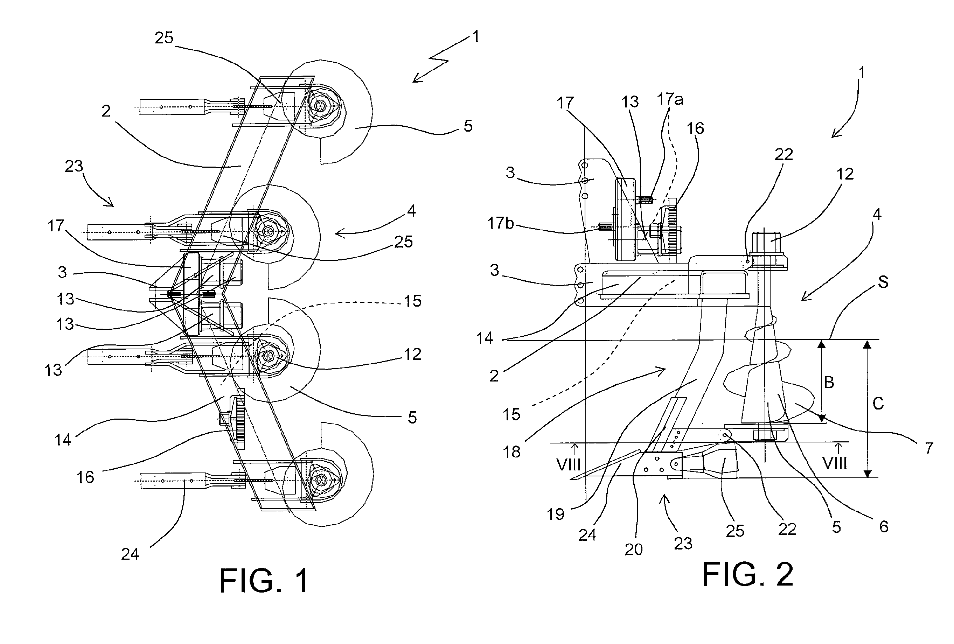

Advantageously in any case, the tilling means 4 comprise a plurality of augers 5 mounted on the support structures 2 and distributed transversely to the direction of advance, as shown in the accompanying figures 1, 3 and 5.

Each auger 5 is associated to a hydraulic motor 12 that keeps it in rotation during the tilling of the soil. In the illustrated embodiments, each hydraulic motor 12 is connected through its own hydraulic conduit (not shown herein) to a hydraulic pump 13 mounted on a hollow metallic beam 14 which constitutes a cross member of the support structure 2. Each pump 13 is in turn connected to a tank 15, itself connected to a cooling radiator 16.

In the embodiment illustrated in the accompanying figures then, the pumps are paired in twos, and each pair is mechanically connected to a torque take-off 17a of a main coupler 17, also having at least torque take-off 17b able to be connected to a rear torque take-off of the towing vehicle.

In the preferred embodiment, the apparatus 1 further comprises an organ 18 for opening the soil mounted on the support structure 2 in front of each auger 5. Each organ 18 for opening the soil is arranged coplanar to the axis of rotation of the related auger 5.

In the illustrated embodiments, the organ 18 for opening the soil is constituted by a vertical blade 19 rigidly associated to the support structure 2 and having a wedge shaped front profile.

As seen in Figure 8, in the lower part, the vertical blade 19 is also provided with a reinforcement 20 in order to protect the relative fastening points between the auger 5 and the vertical blade 19.

In the illustrated embodiments each auger 5 is pivotally mounted on a detachable portion 21 of the support structure 2, which detachable portion 21 is in turn fastened to the rest of the support structure 2, directly in the upper part, and through the related vertical blade 19 in the lower part. Both said connections are obtained with a pin 22, but the lower pin 22 is preferably a shear pin destined to break when on the auger 5 acts a horizontal force exceeding a certain pre-set value (for instance when the auger 5 encounters a fixed obstacle such as a boulder), in order to allow an upward rotation of the detachable portion 21 bearing the auger 5.

The apparatus 1 may further comprise a drainer device 23 for the creation of drainage channels in the soil, connected to the support structure 2 at a lower height than that of each auger 5.

Advantageously, a drainer device 23 can be rigidly connected to the lower part of each vertical blade 19.

Each drainer device 23 illustrated in the accompanying figures comprises a front wedge shaped element 24 rigidly fastened to the vertical blade 19, and a rear shaper element 25 aligned with the wedge shaped element 24 and pivotally engaged thereto (in Figures 2, 4 and 6 the shaper element 25 is shown in two possible positions). Said shaper element 25 posteriorly ends with cylindrical shape.

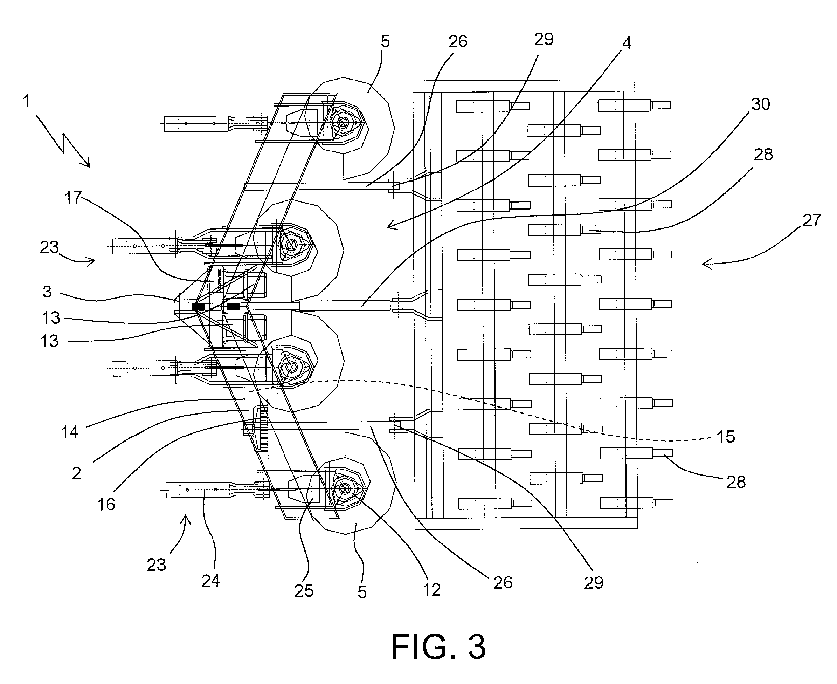

In the more complex embodiments (Figures 3 through 6), the apparatus 1 further comprises hitching appendages 26 associated with the support structure 2 to allow the hitching to the support structure 2 itself of a device 27 for finishing the soil for the superficial tilling of the soil itself.

Depending on the embodiments, the apparatus 1 may or may not comprise said finisher device 27.

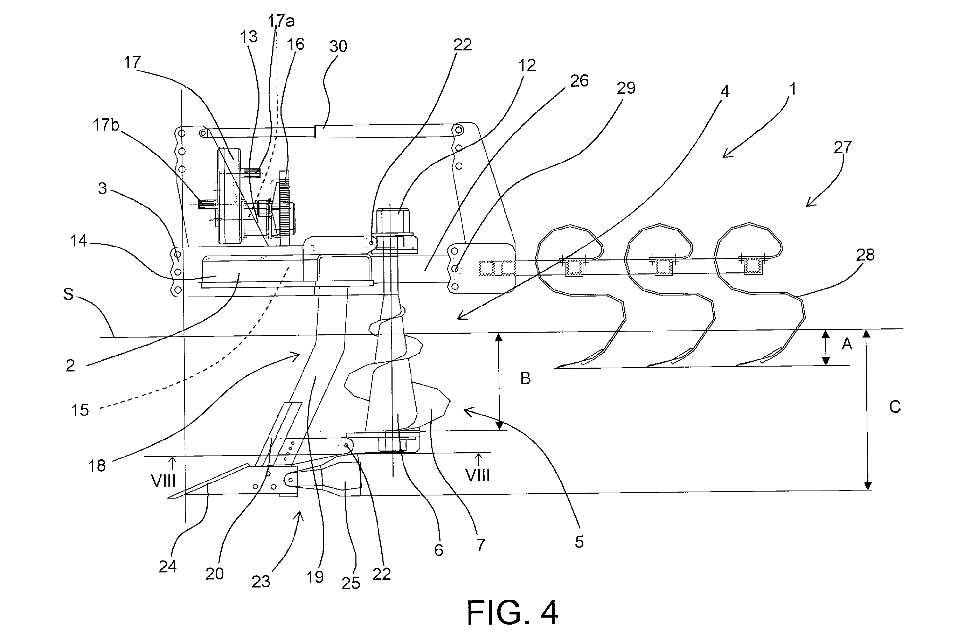

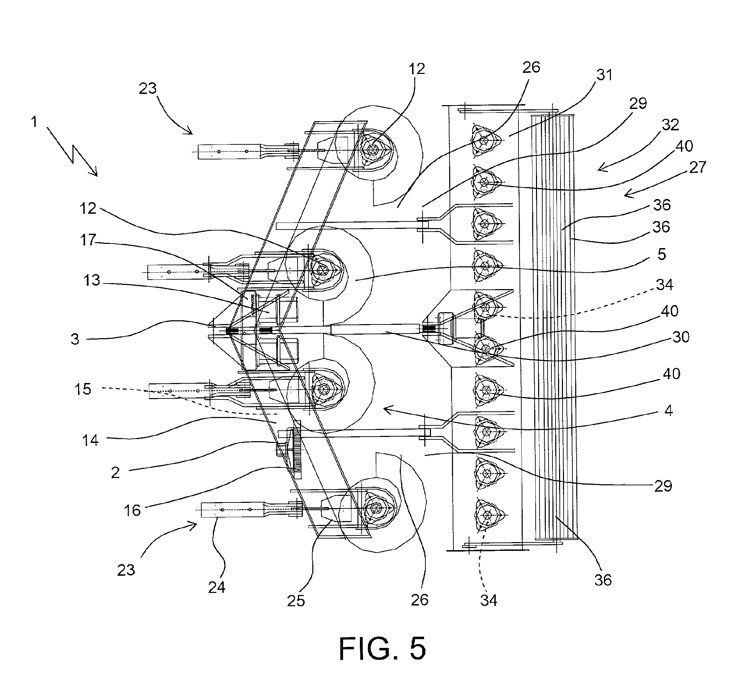

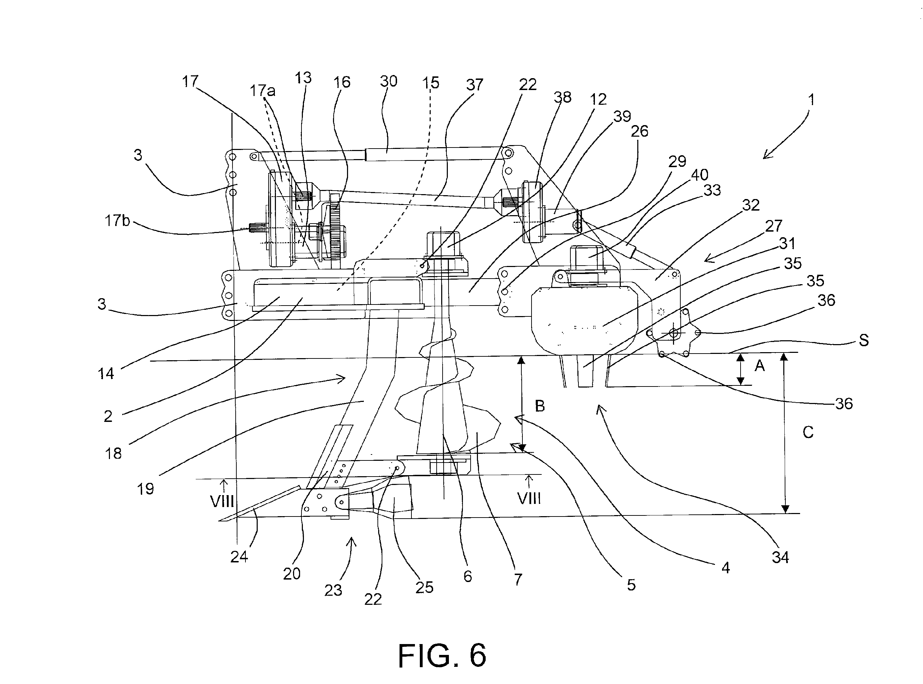

By way of example, in Figures 3 and 4 the finisher device 27 is constituted by a cultivator with three offset rows of spring teeth 28 (known in itself), whilst in Figures 5 and 6 it is constituted by a rotating harrow (also known).

In both cases the finisher device 27 is connected to the support structure 2 by means of multiple aligned lower pivots 29 and by means of an upper hydraulic cylinder 30 which can command its rotation relative to the support structure 2 itself.

The rotating harrow shown in Figures 5 and 6 comprises a front part 31 and a rear part 32 pivotally engaged to the front part 31 and able to be rotated relative thereto by means of an appropriate actuator 33 (not shown in Figure 5).

The front part 31 is provided with a plurality of assemblies 34 rotating about a vertical axis, and each comprising four blades 35 arranged converging downwards and facing each other in twos, in order to crumble the large superficial pieces of soil.

In turn, the rear part 32 is constituted by a plurality of horizontal tubes 36 uniformly distributed along a circumference and rotating about the axis of said circumference to level the soil.

The operative connection of the rotating harrow 27 is effected by means of a shaft 37 connected between a further mechanical torque take-off 17a of the main coupler 17, and a secondary coupler 38 in turn connected to an additional hydraulic pump 39 connected (with conduits not shown herein) to a plurality of additional hydraulic motors 40 each associated with a rotating assembly 34.

All hydraulic circuits for operating the machine described in relation to the accompanying figures can be replaced with other embodiments, both mechanical and hydraulic.

When the apparatus 1 is associated with a towing vehicle such as a tractor, the main coupler 17 is connected to the rear power take-off of the tractor and allows the operation of all hydraulic pumps 13, 39 present in the apparatus.

The velocity of rotation of the augers depends on the velocity of the respective pump, which can be varied in continuous fashion to adapt it to the type of work operation to be executed. To vary the velocity of rotation, each pump can for instance be provided with an appropriate regulating screw.

In general, the velocity of rotation must be adapted to some fundamental parameters: the speed of advance of the apparatus in the soil, the type of soil, and the condition of the soil (i.e. according to how dry the soil is).

When the vehicle advances, the vertical blades 19 cut the soil vertically by opening the way to the augers 5 which thrust the soil upwards.

Given the high velocity of rotation of the augers 5, the helical blades 7 also perform a first crumbling of the soil into small pieces of sod (the size of the pieces depends, in any case, both on the type of soil and on the speed of advance of the vehicle).

Thanks to the frustum cone shape of the augers 5 the soil is made to "bloom", in the sense that a radial outward thrust is also exerted on the soil expelled in proximity with the summit of the augers 5.

As shown in the accompanying drawings, the different parts of the apparatus 1 operate at diversified depths relative to the soil level S.

By way of example, the finishing devices work the superficial layer A of about 20 cm, the augers 5 a layer B of about 40-55 cm, whilst the drainer devices 23 travel at a depth C which may vary between 75 and 90 cm.

Advantageously, the apparatuses shown in Figures 3 through 6 require, for their correct operation, high power towing vehicles.

The present invention achieves important advantages.

In the first place, the apparatus for tilling the soil of the present invention assures an excellent mixing of the soil in correspondence with the layer involved by the action of the augers, together with an excellent aeration of the soil itself, and with a primary crumbling thereof.

In the second place, when the apparatus is also provided with the organs for opening the soil enables to break up any sole which may be present in the field being tilled.

This characteristic, coupled with the excellent ability to aerate the soil, assures a longer duration of the water drainage channels created by the drainer devices.

It should also be stressed that the apparatus of the present invention does not require, for its operation, that the tractor advance with the wheels in furrows, but may very well be operated even with the tractor advancing freely on the field.

Additionally, the most complete forms of the apparatus of the present invention allow to effect a complete tilling of the soil in a single pass, thus assuring a greater flexibility in working times which can enable to amortise even any periods of adverse weather conditions which normally represent instead idle times that cannot always be recovered.

It should also be noted that the present invention is relatively easy to implement.

The invention thus conceived can be subject to numerous modifications and variations, without thereby departing from the scope of the inventive concept that characterises it. All details can be replaced with other, technically equivalent elements and in practice all materials employed, as well as the shapes and dimension of the various components, may be any depending on requirements.

## Claims

1. Apparatus for tilling the soil, able to be associated to a towing vehicle to be operated according to a predefined direction of advance, and comprising a rigid support structure (2) able to be fastened to the towing vehicle, and means (4) for tilling the soil mounted on the support structure (2), **characterised in that** said tilling means (4) comprise at least a motorised auger (5) pivotally mounted on the support structure (2) according to an axis of rotation, said auger (5) being capable of being immersed in the soil to be tilled to exert on the soil itself a thrust having at least a component directed upwardly.

2. Apparatus as claimed in claim 1 **characterised in that** said auger (5) comprises an inner shaft (6), and a helical blade (7) developing on said inner shaft (6).

3. Apparatus as claimed in claim 1 or 2 **characterised in that** the axis of rotation of said auger (5) is vertical.

4. Apparatus as claimed in claim 1, 2 or 3 **characterised in that** said auger (5) has cone frustum development to exert a differentiated action on different layers of soil to be tilled.

5. Apparatus as claimed in claim 4 **characterised in that** said helical blade (7) has a first and a second terminal segment (8), (9) in correspondence respectively with a portion with maximum diameter and with a portion with minimum diameter of the cone frustum auger (5), the first terminal segment (8) being joined to the inner shaft (6), and the second terminal segment (9) presenting inclination accentuated downward relative to the blade (7) in general, to determine a downward traction of the auger (5) rotating inside the soil.

6. Apparatus as claimed in claims 3 and 4 or 3, 4 and 5 **characterised in that** said auger (5) has upwardly decreasing diameter.

7. Apparatus as claimed in claim 4, 5 or 6 **characterised in that** said inner shaft (6) has cone frustum shape, with its diameter decreasing in a manner corresponding to that of the auger (5) as a whole.

8. Apparatus as claimed in any of the previous claims, **characterised in that** said auger (5) is associated to a hydraulic motor (12) that maintains it in rotation during the tilling of the soil.

9. Apparatus as claimed in any of the previous claims, **characterised in that** it comprises a plurality of said augers (5) mounted on the support structure (2) and distributed transversely to the direction of advance.

10. Apparatus as claimed in any of the previous claims, **characterised in that** it further comprises an organ (18) for opening the soil mounted on the support structure (2) in front of each auger (5), with reference to the direction of advance, and arranged coplanar to the axis of rotation of the auger (5) itself.

11. Apparatus as claimed in claim 10 **characterised in that** said organ (18) for opening the soil is constituted by a vertical blade (19) rigidly associated to the support structure (2) and having wedge shaped front profile.

12. Apparatus as claimed in any of the previous claims, **characterised in that** it further comprises at least a drainer device (23) for the creation of drainage channels in the soil, said drainer device (23) being mounted on said support structure (2) at a lower height relative to each auger (5).

13. Apparatus as claimed in claims 11 and 12 **characterised in that** said vertical blade (19) is rigidly connected to said drainer device (23), to create in the soil a vertical channel in communication with the drainage channel created by the respective drainer device (23).

14. Apparatus as claimed in claim 12 or 13 **characterised in that** said drainer device (23) comprises a front wedge shaped element (24) and a rear shaper element (25) aligned with the wedge shaped element (24).

15. Apparatus as claimed in any of the previous claims, **characterised in that** it further comprises hitching appendages (26) associated with the support structure (2) to allow the hitching to the support structure (2) itself of a device (27) for finishing the soil for the superficial tilling of the soil.

16. Apparatus as claimed in claim 15 **characterised in that** it further comprises a finishing device (27) associated to said hitching appendages (26).

17. Apparatus as claimed in claim 16 **characterised in that** said finishing device (27) is constituted by a cultivator.

18. Apparatus as claimed in claim 16 **characterised in that** said finishing device (27) is constituted by a harrow.

19. Apparatus as claimed in any of the previous claims, **characterised in that** said auger or augers (5) have variable and adjustable velocity of rotation.

20. Vehicle for tilling the soil, **characterised in that** it comprises an apparatus (1) as claimed in any of the previous claims.
